# EUROPÄISCHE PATENTANMELDUNG

(11) **EP 1 381 104 A1**
(43) Veröffentlichungstag der Anmeldung: **14.01.2004**
(21) Anmeldenummer: 02015490.2
(22) Anmeldetag: 12.07.2002
(51) Int. Cl.: H01M 8/24, H01M 8/02, H01M 8/04

(54) **Brennstoffzellenstapel mit Gegestromkühlung und einer Vielzahl von Kühlmittelsammelkanälen parallel zur Stapelachse**

(71) Anmelder: Höller, Stefan, 23558 Lübeck (DE); Küter, Uwe, 23558 Lübeck (DE)
(72) Erfinder: Höller, Stefan, 23558 Lübeck (DE); Küter, Uwe, 23558 Lübeck (DE)
(74) Vertreter: Vollmann, Heiko, Dipl.-Ing.

(57) **Zusammenfassung**

Der Brennstoffzellenstapel besteht aus mehreren übereinander angeordneten Brennstoffzellen (2) der Polymer-Elektrolyt-Membran-Bauart. Zwischen benachbarten Membran-Elektrodeneinheiten (4, 5, 6) ist jeweils eine Bipolarplatte (*7*) angeordnet, welche Längskanäle (10) für die Wasserstoffversorgung und Querkanäle (8) für die Sauerstoffversorgung und zur Kühlung aufweisen. Über Sammelkanäle (11) die für jeden zweiten Kühlkanal abströmseitig vorgesehen sind, kann bei beidseitiger Anströmung des Stapels innerhalb der Luftkanäle (8) eine Strömung erzeugt werden, bei der benachbarte Kanäle derselben Brennstoffzelle (2) entgegengerichtet durchströmt werden. Hierdurch erfolgt eine sehr homogene Temperaturverteilung innerhalb der Zelle (2) bzw. des Stapel (1).

## Beschreibung

Die Erfindung betrifft einen Brennstoffzellenstapel gemäß den im Oberbegriff des Anspruchs 1 angegebenen Merkmalen.

Derartige Brennstoffzellenstapel sind aus Brennstoffzellen der Polymer-Elektrolyt-Membran-Bauart aufgebaut und bestehen aus mehreren zu einem Stapel (Stack) angeordneten Zellen. Der grundsätzliche Aufbau solcher Zellen ist an sich bekannt, es wird in diesem Zusammenhang auf DE 195 44 323 A1 und DE 199 38 589 A1 verwiesen.

Aus derartigen Brennstoffzellen aufgebaute Brennstoffzellenstapel bzw. Stacks zählen ebenfalls zum Stand der Technik. Seitens der Proton Motor GmbH wird unter der Typenbezeichnung HZ40 ein flüssigkeitsgekühltes Brennstoffzellenstack mit 5,5 kW Leistung angeboten. Bei diesem Stack erfolgt die Brennstoffzufuhr einerseits und die Sauerstoffzufuhr in Form von Luftzufuhr andererseits über zentrale Anschlüsse, die Verteilung innerhalb des Stacks über Kanalsysteme. Um die während des Betriebs entstehende Wärme abzuführen, ist eine Flüssigkeitskühlung vorgesehen, welche ebenfalls über zentrale Anschlüsse und eine innerhalb der Bipolarplatten geführtes Kanalsystem arbeitet.

Ein Problem bei solchen Brennstoffzellenstapeln ist häufig die Abfuhr der aufgrund des katalytischen Prozesses entstehenden Reaktionswärme, die entweder über den zugeführten Luftsauerstoff oder aber über ein gesondertes beispielsweise auch flüssigkeitsführendes Kühlsystem abzuführen ist. Einerseits sollte eine Brennstoffzelle beim Betrieb eine möglichst hohe Temperatur aufweisen, um mit gutem Wirkungsgrad zu arbeiten, andererseits darf die Temperatur nicht so hoch sein, dass das in der Polymer-Elektrolyt-Membran gespeicherte Wasser verdunstet, da die Protonenleitfähigkeit der Membran mit fallendem Wassergehalt abnimmt. Je nach verwendeter Membran ist daher eine Betriebstemperatur von beispielsweise 60°C bis 90°C erstrebenswert. Diese Temperatur sollte sowohl über die Fläche einer Brennstoffzelle möglichst konstant als auch innerhalb des Stapels konstant sein, damit möglichst alle Brennstoffzellen über ihre gesamte Fläche mit hohem Wirkungsgrad arbeiten.

Ein weiteres Problem insbesondere bei Brennstoffzellenstapel kleiner und mittlerer Leistung kann dann auftreten, wenn aufgrund ungünstiger Kanalquerschnitte und Kanallängen ein relativ hoher Druck aufzubringen ist, um das Kühlmedium durch das Kanalsystem zu leiten. Die hierfür erforderliche Leistung von Nebenaggregaten verschlechtert den Wirkungsgrad regelmäßig.

Vor diesem Hintergrund liegt der vorliegenden Erfindung die Aufgabe zugrunde, einen Brennstoffzellenstapel der eingangs genannten Art so auszubilden, dass eine möglichst gleichmäßige Temperaturverteilung innerhalb der einzelnen Brennstoffzellen und innerhalb des Brennstoffzellenstapels bei möglichst geringem Durchströmungswiderstand gegeben ist.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung sowie der Zeichnung angegeben.

Grundgedanke der vorliegenden Erfindung ist es, das Kühlfluid innerhalb jeder Brennstoffzelle des Brennstoffzellenstapels so zu führen, dass die Durchströmungsrichtung benachbarter Kanäle derselben Brennstoffzelle entgegengerichtet ist. Hierdurch kann eine sehr gleichmäßige Temperaturverteilung innerhalb der Brennstoffzelle und damit auch innerhalb des Brennstoffzellenstapels erreicht werden, wobei der Strömungswiderstand insbesondere bei geeigneter Verbindung der Kanäle wie sie im folgenden noch im Einzelnen beschrieben sein wird, vergleichsweise gering ist.

Es zählt zwar zum Stand der Technik, die Kanalführung innerhalb einer Brennstoffzelle für den Luftsauerstoff schlangenlinien- bzw. mäanderförmig auszugestalten. Bei einer solchen Ausbildung ist die Durchströmungsrichtung benachbarter Kanäle zwar ebenfalls entgegengerichtet, doch liegen hierbei die Kanäle nicht parallel in Anströmrichtung, sondern hintereinander, was sowohl thermisch als auch strömungstechnisch eher ungünstig ist, da zum einen die Wärmeabfuhr nahe dem ausströmseitigen Ende in der Regel ungenügend ist und zum anderen ein erheblicher Druck für die Durchströmung aufzubringen ist, was ebenfalls den Wirkungsgrad verschlechtert.

Die parallele Anströmung der parallel zueinander angeordneten Kanäle derart, dass die Durchströmungsrichtung benachbarter Kanäle derselben Brennstoffzelle entgegengerichtet ist, ermöglicht hingegen bei geringem Durchströmungswiderstand eine gute Kühlung, die zu einer gleichmäßigen Wärmeverteilung innerhalb der Brennstoffzelle und damit auch des Brennstoffzellenstapels führt.

Um die Kanäle der einzelnen Brennstoffzellen nicht einzeln verrohren zu müssen, sondern mit fertigungstechnisch geringem Aufwand anschließend zu können, ist es zweckmäßig, die An- oder Abströmseiten übereinander liegender Kanäle der zu einem Stapel angeordneten Brennstoffzellen in einem gemeinsamen Sammelkanal zu verbinden, der vorzugsweise parallel zur Stapelachse verläuft, um so eine kurze und somit widerstandsarme Leitungsverbindung herzustellen.

Besonders günstig ist es, wenn mehrere Sammelkanäle parallel zueinander und zu beiden Seiten des Stapels angeordnet sind, so dass vorzugsweise alle Kanäle anströmseitig oder abströmseitig in einen Sammelkanal münden. Durch solche stirnseitig am Ende der Brennstoffzellen bzw. des Brennstoffzellenstapels angeordnete Sammelkanäle kann auf konstruktiv einfache und strömungstechnisch günstige Weise die erfindungsgemäße Strömungsanordnung realisiert werden.

Je nach Energiedichte im Brennstoffzellenstapel können die Kanäle ausschließlich oder nicht ausschließlich der Kühlung dienen. Wenn die Kanäle ausschließlich als Kühlkanäle dienen, kann ein von der übrigen Funktion unabhängiges Fluid, also ein Gas oder eine Flüssigkeit durch die Kanäle geführt werden. Insbesondere bei Verwendung einer Flüssigkeit ist die abführbare Wärmemenge vergleichsweise hoch.

Besondes günstig ist eine Ausführung, bei der die Kühlkanäle gleichzeitig zur Sauerstoffversorgung der Brennstoffzellen dienen und als zur Kathode der jeweiligen Membran-Elektroden-Einheit hin offene Kanäle ausgebildet sind. Eine solche Anordnung ist deshalb besonders günstig, weil dann eine wenig aufwändige Sauerstoffversorgung durch Zufuhr von gegebenenfalls gereinigter Umgebungsluft erfolgen kann. Bei einer solchen Anordnung wird mit zunehmender Wärmeabfuhr auch gleichzeitig eine verbesserte Sauerstoffversorgung des Brennstoffzellenstapels erreicht, was vorteilhaft ist. Im Übrigen ist dann der erforderliche Energieaufwand für die zur Durchströmung für Kühlzwecke aufzuwendende Energie regelmäßig geringer als bei einem gesonderten Netz von Kühlkanälen.

Bevorzugt weisen die Kühlkanäle eine lichte Weite von weniger als 3 mm, vorzugsweise von etwa 2 mm auf. Eine solche Anordnung ist insbesondere dann vorteilhaft, wenn die Kühlkanäle auch zur Versorgung des Stapels mit Luftsauerstoff dienen, da dann die Anlageflächen der Kohleschicht, in der üblicherweise diese zur Kathode hin offenen Kanäle vorgesehen sind, so gestaltet ist, dass ein ausreichender Anpressdruck an der Protonenaustauschmembran gegeben ist, so dass die Membran über möglichst ihre gesamte Fläche wirksam ist. Andererseits gewährleistet die vorgenannte Dimensionierung, dass eine Durchströmung der Kanäle mit vergleichsweise geringen Strömungsverlusten, d.h. unter Aufbringung nur geringen Überdrucks gewährleistet ist. Dabei sollten die Kühlkanäle zweckmäßigerweise eine Länge zwischen 20 mm und 200 mm aufweisen. Es versteht sich, dass die lichte Weite der Kanäle umso kleiner sein kann, je kürzer die Kanäle sind und umgekehrt.

Die Sammelkanäle, durch welche die Kühlkanäle anström- oder abströmseitig versorgt werden, können in einfacher Weise dadurch ausgebildet werden, dass im Brennstoffzellenstapel randseitig entsprechende Ausnehmungen vorgesehen sind. Diese Ausnehmungen werden also in allen diesen Randbereich abdeckenden Schichten der Brennstoffzellen und somit des Brennstoffzellenstapels vorgesehen, vorzugsweise im inaktiven Randbereich, so dass sich nach Montage des Stapels parallel zur Stapelachse angeordnete Sammelkanäle bilden.

Wenn, was zum Stand der Technik zählt, die Bipolarplatten der Brennstoffzellen in einem elastischen Rand eingegliedert sind, der zugleich die seitliche Abdichtung der jeweiligen Brennstoffzelle nach außen hin bildet, dann können die Sammelkanäle durch Ausnehmungen in den übereinander liegenden Dichträndern gebildet sein. Es sind somit konstruktiv mit Ausnahme der Ausnehmungen keine besonderen Vorkehrungen zur Schaffung dieser Sammelkanäle zu treffen.

Vorzugsweise wird das Kühlmedium mit einem Überdruck von 0,1 bis 10 mbar zugeführt bzw. mit einem entsprechenden Unterdruck abgeführt. Ein solcher Druck kann mit Lüftern erzeugt werden, wie sie beispielsweise in der Halbleiterelektronik verwendet werden, z. B. CPU-Lüfter, die wenig Versorgungsenergie benötigen. Selbst der vorgenannte obere Druckbereich kann durch Radiallüfter erzeugt werden, die vergleichsweise energieeffizient arbeiten.

Die Erfindung ist nachfolgend anhand eines in der Zeichnung dargestellten Ausführungsbeispiels näher erläutert. Es zeigen
- Fig.1: in stark vereinfachter schematischer Darstellung einen Brennstoffzellenstapel gemäß der Erfindung mit abströmseitigen Sammelkanälen und
- Fig. 2: in stark vereinfachter Darstellung einen Schnitt durch das Kühlkanalsystem einer Brennstoffzelle quer zur Achse des Brennstoffzellenstapels gemäß Fig. 1 längs der Schnittlinie ll-ll in Fig. 1.

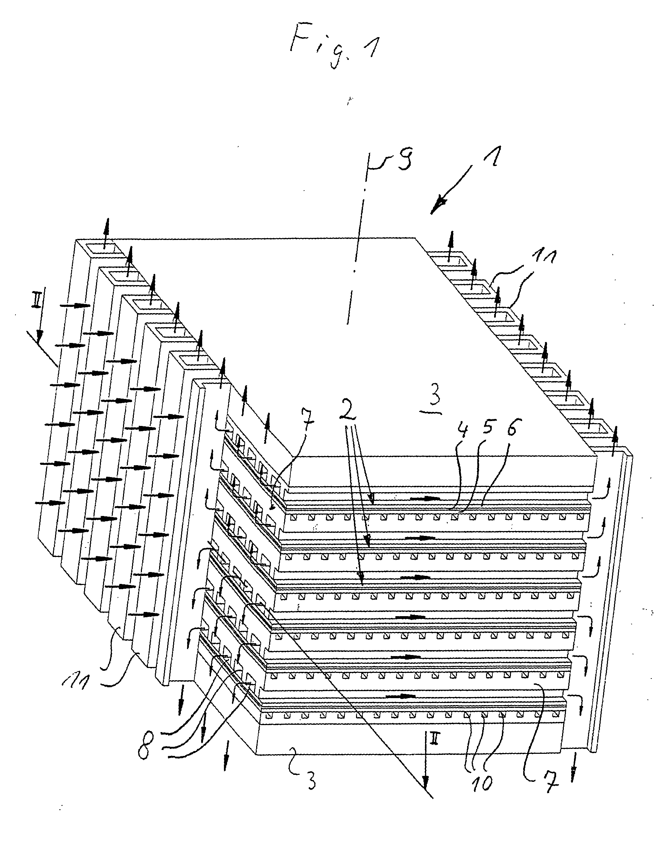

Der in Figur 1 schematisch dargestellte Brennstoffzellenstapel 1 ist in an sich bekannter Weise aus einer Vielzahl, hier sechs Brennstoffzellen 2 aufgebaut, die übereinander angeordnet und zwischen Endplatten 3 eingespannt sind. Jede Brennstoffzelle 2 besteht aus einer Membran-Elektroden-Einheit, die durch eine Folie 4 in Form einer Polymer-Elektrolyt-Membran, eine daran anliegende Anode 5 sowie eine auf der anderen Seite anliegende Kathode 6 gebildet ist. Zwischen benachbarten Membran-Elektroden-Einheiten 4, 5, 6 ist eine Bipolarplatte 7 angeordnet, die elektrisch leitend und im Wesentlichen aus Kohlenstoff gebildet ist.

Jede Bipolarplatte 7 weist an ihrer zur Kathode 6 weisenden Seite Querkanäle 8 auf, die parallel zueinander angeordnet sind und sich quer zur Stapelachse 9 sowie den ebenfalls innerhalb der Bipolarplatte 7 vorgesehenen Längskanälen 10 erstrecken, die zur Anode 5 hin offen sind. Die Längskanäle 10 dienen zur Brennstoff-, insbesondere Wasserstoffzufuhr der Zellen, sie sind durch zur Anode 5 hin offene und im Querschnitt rechteckige Nuten an der Oberseite jeder Bipolarplatte 7 gebildet. Die Querkanäle 8 hingegen dienen zur Sauerstoffzufuhr der Brennstoffzellen 2 sowie Wärmeabfuhr, also zur Kühlung. Sowohl die Sauerstoffzufuhr als auch die Kühlung erfolgen mittels eines Luftstromes, der mittels eines Lüfters erzeugt wird und der bei dem in Figur 1 dargestellten Brennstoffzellenstapel 1 sowohl linksseitig als auch rechtsseitig des Stapels durch eine entsprechende (nicht dargestellte)Kanalführung ansteht.

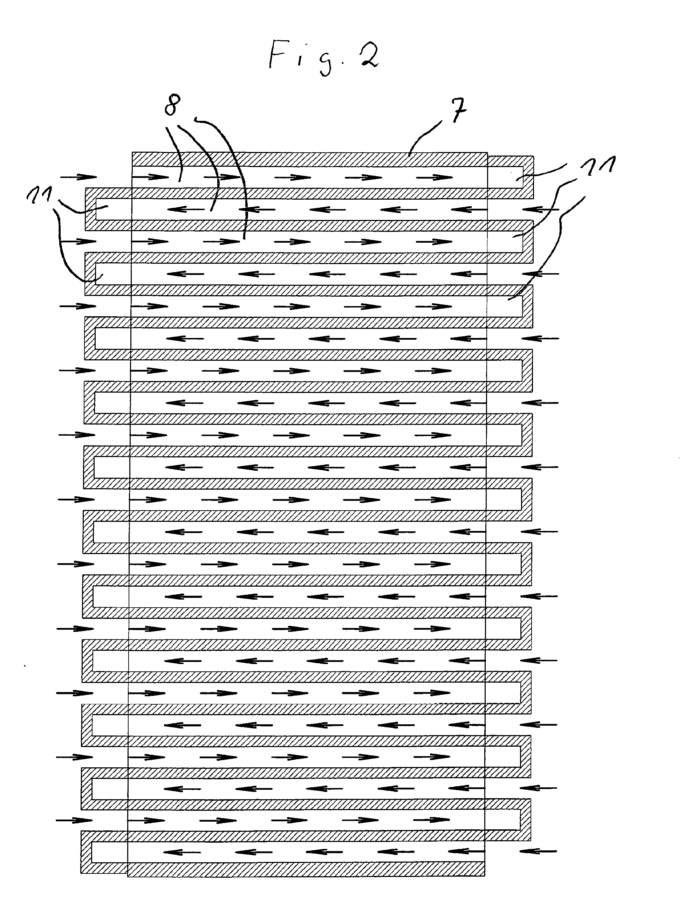

Da die Luftführung (Pfeile) wie eingangs im Einzelnen beschrieben, innerhalb einer Brennstoffzelle 2 so gestaltet ist, dass in benachbarten Querkanälen 8 jeder Brennstoffzelle 2 die Strömung entgegengesetzt verläuft, sind die Auslässe der Querkanäle 8 der übereinander angeordneten Brennstoffzellen 2 durch parallel zur Stapelachse 9 angeordnete Sammelkanäle 11 miteinander leitungsverbunden, so wie dies aus Figur 1 ersichtlich ist. Die Sammelkanäle 11, die in Figur 1 durch im Querschnitt U-förmige Bauteile dargestellt sind, können, wie eingangs erläutert, auf unterschiedliche Weise gebildet sein. Sie sind so gestaltet und angeordnet, dass sie die Abströmseiten der in Achsrichtung 9 jeweils übereinander liegenden Enden der Querkanäle 8 sämtlicher Brennstoffzellen 2 leitungsverbunden, jedoch die Einströmseiten jeweils rechts und links benachbart liegender Kanäle 8 nicht tangieren. Die Bauteile sind also so ausgestaltet und angeordnet, dass bei Luftanströmung des Brennstoffzellenstapels von der in Fig. 1 gesehenen linken und rechten Seite sich in jeder Brennstoffzelle 2 in den Querkanälen 8 eine Strömung einstellt, wie sie in Fig. 2 anhand des Querschnitts durch die Luftkanäle 8 einer Brennstoffzelle 2 (mittels Pfeildarstellung) beispielhaft dargestellt ist.

Bei dem dargestellten Ausführungsbeispiel erfolgt die Kanalverbindung mittels der Sammelkanäle 11 jeweils abströmseitig, sie kann jedoch alternativ auch anströmseitig erfolgen, was also eine Umkehr sämtlicher Strömungsrichtungen in den Figuren bedeuten würde.

Die in Figur 1 und 2 schematisch dargestellten Sammelkanäle werden in der Regel beim Aufbau des Brennstoffzellenstapels 1 gebildet, in dem entsprechende Ausnehmungen im Randbereich der Bauteile beispielsweise 4, 5, 6, 7 oder deren randseitiger Einfassung gebildet werden. Die Sammelkanäle 11 sind dabei so zu gestalten, dass sich ein möglichst geringer Strömungswiderstand ergibt.

Um auch den Strömungswiderstand innerhalb der Brennstoffzellen, insbesondere für die Luftzufuhr, gering zu halten, sind die Querkanäle 8 querschnitts- und längenmäßig entsprechend dimensioniert. Im vorliegenden Ausführungsbeispiel weisen die Querkanäle 8 eine lichte Weite von 2 mm auf bei einer Länge von 100 mm. Auf diese Weise kann bei nur geringem Überdruck eine gute Durchströmung des Brennstoffzellenstapels 1 sichergestellt werden. Im vorliegenden Beispiel reicht bei entsprechender Kanalführung zu den Stirnseiten des Brennstoffzellenstapels 1 ein kleiner Radiallüfter oder CPU-Lüfter aus, um den Brennstoffzellenstapel 1 ausreichend sowohl mit Sauerstoff als auch mit Kühlluft zu versorgen.

Die vorbeschriebene Anordnung gewährt in der Regel eine sehr gleichmäßige Temperaturverteilung innerhalb des Brennstoffzellenstapels 1. Wenn die Kühlung einer solchen Anordnung nicht ausreicht oder aus anderen Gründen ein gesondertes Kühlsystem zu installieren ist, so kann dies durch entsprechende Anordnung von Kühlkanälen beispielsweise in der Bipolarplatte 7 zwischen den Querkanälen 8 und den Längskanälen 10 mit entsprechender Kanalführung über Sammelkanäle 11 erfolgen. Es versteht sich, dass in diesem Fall die Leitungsverbindung für die Sauerstoff führenden Kanäle 8 für die Brennstoff führenden Kanäle 10 gesondert vorgesehen sein muss.

### Bezugszeichenliste

- 1 -: Brennstoffzellenstapel
- 2 -: Brennstoffzellen
- 3 -: Endplatte
- 4 -: Folie
- 5 -: Anode
- 6 -: Kathode
- 7 -: Bipolarplatte
- 8 -: Querkanal (Luft)
- 9 -: Stapelachse
- 10 -: Längskanal (Brennstoff)
- 11 -: Sammelkanal

## Patentansprüche

1. Brennstoffzellenstapel mit mehreren, zu einem Stapel (1) angeordneten Brennstoffzellen (2) der Polymer-Elektrolyt-Membran-Bauart, bei dem zwischen benachbarten Membran-Elektroden-Einheiten (4, 5, 6) im wesentlichen parallel zueinander angeordnete und parallel angeströmte Kanäle (8) für ein Kühlfluid vorgesehen sind, **dadurch gekennzeichnet, dass** die Durchströmungsrichtung benachbarter Kanäle (8) derselben Brennstoffzelle (2) entgegengerichtet ist.

2. Brennstoffzellenstapel nach Anspruch 1, **dadurch gekennzeichnet, dass** die An- oder Abströmseiten übereinander liegender Kanäle (8) der zu einem Stapel (1) angeordneten Brennstoffzellen (2) in einem gemeinsamen, vorzugsweise parallel zur Stapelachse (9) verlaufenden Sammelkanal (11) leitungsverbunden sind.

3. Brennstoffzellenstapel nach einem der vorhergehenden Ansprüche, **dadurch gekennzeichnet, dass** mehrere Sammelkanäle (11) parallel zueinander zu beiden Seiten des Stapels (1) angeordnet sind, derart, dass vorzugsweise alle Kanäle (8) anström- oder abströmseitig in einen Sammelkanal (11) münden.

4. Brennstoffzellenstapel nach einem der vorhergehenden Ansprüche, **dadurch gekennzeichnet, dass** die Kanäle ausschließlich der Kühlung dienen und mit einem Gas oder einer Flüssigkeit zum Kühlen durchströmt sind.

5. Brennstoffzellenstapel nach einem der vorhergehenden Ansprüche, **dadurch gekennzeichnet, dass** die Kühlkanäle (8) gleichzeitig zur Sauerstoffversorgung der Brennstoffzellen (2) dienen und zur Kathode (6) der jeweiligen Membran-Elektroden-Einheit (4, 5, 6) hin offen ausgebildet sind.

6. Brennstoffzellenstapel nach einem der vorhergehenden Ansprüche, **dadurch gekennzeichnet, dass** die Kühlkanäle (8) eine lichte Weite von weniger als 3mm, vorzugsweise von etwa 2 mm aufweisen.

7. Brennstoffzellenstapel nach einem der vorhergehenden Ansprüche, **dadurch gekennzeichnet, dass** die Kühlkanäle (8) eine Länge zwischen 20 und 200 mm aufweisen.

8. Brennstoffzellenstapel, **dadurch gekennzeichnet, dass** innerhalb des Stapels (1) randseitig Ausnehmungen vorgesehen sind, welche die Sammelkanäle (11) bilden.

9. Brennstoffzellenstapel nach einem der vorhergehenden Ansprüche, **dadurch gekennzeichnet, dass** zwischen benachbarten Brennstoffzellen (2) randseitig ein elastischer, eine Bipolarplatte umgebender Dichtrand vorgesehen ist und dass die Sammelkanäle (11) durch Ausnehmungen in den übereinander liegenden Dichträndern gebildet sind.

10. Brennstoffzellenstapel nach einem der vorhergehenden Ansprüche, **dadurch gekennzeichnet, dass** Kühlmedium mit einem Überdruck von 0,1 bis 10 mbar zugeführt oder mit einem entsprechenden Unterdruck abgeführt ist.
